(19) Europäisches Patentamt
European Patent Office
Office européen des brevets

(11) Veröffentlichungsnummer: **0 470 676 A2**

# (12) EUROPÄISCHE PATENTANMELDUNG

(21) Anmeldenummer: **91250184.8**

(51) Int. Cl.5: **G01K 17/06**

(22) Anmeldetag: **10.07.91**

(30) Priorität: **09.08.90 DD 343349**
**10.05.91 DE 4115852**

(43) Veröffentlichungstag der Anmeldung:
**12.02.92 Patentblatt 92/07**

(84) Benannte Vertragsstaaten:
**AT BE CH DE DK ES FR GB GR IT LI LU NL SE**

(71) Anmelder: **RICCIUS + STROSCHEN GmbH**
**Regelungstechnik für Heizung, Klima,**
**Lüftung, Ostpreussendamm 137/138**
**W-1000 Berlin 45(DE)**

(72) Erfinder: **Bode, Willi**
**Komturstrasse 14a**
**O-8800 Zittau(DE)**
Erfinder: **Effmert, Johannes**
**Zahnaer Strasse 133**
**O-4601 Wittenberg(DE)**
Erfinder: **Seibt, Burkhard**
**Neudeckerweg 125**
**W-1000 Berlin 47(DE)**
Erfinder: **Spielmann, Sylvia**
**Marchlewskiring 53**
**O-7560 Guben(DE)**

(54) **Verfahren zur Diagnose des Verschmutzungszustandes von Wärmeübertragern.**

(57) 2.1. Der Erfindung liegt die technische Aufgabe zugrunde, anhand der Diagnose des Betriebszustandes der Wärmeübertrager Rückschlüsse auf die Verschmutzung zu ziehen und daraus geeignete Maßnahmen für das Betriebsregime abzuleiten.

2.2. Erfindungsgemäß wird die technische Aufgabe dadurch gelöst, daß im Rahmen einer Signalverarbeitung eine energetische Kenngröße zu unterschiedlichen Zeitpunkten gebildet wird, und das aus Istzustand und Ausgangswert gebildete Verhältnis, welches sich im Bereich $0 \leq Ke(t)/Ke(0) \leq 1$ bewegt, wird als Maß des Verschmutzungsgrades des Wärmeübertragers angezeigt.

2.3. Das erfindungsgemäße Verfahren ist anwendbar bei Wärmeübertragern Dampf/Wasser bzw. Wasser/Wasser in der Energie-, Heizungs- und Verfahrenstechnik.

Fig. 1

EP 0 470 676 A2

Objekte, bei denen die Anwendung der Erfindung möglich und zweckmäßig ist, sind Wärmeübertrager Dampf/Wasser bzw. Wasser/Wasser in der Energie-, Heizungs - und Verfahrenstechnik. Das Verfahren ist auf andere Medien wie Luft, Kältemittel erweiterbar. Das Verfahren ist für stehende und liegende Wärmeübertrager einsetzbar.

Die derzeit vorhandene Meß- und Auswertetechnik in der WärmeVersorgung, orientiert sich hauptsächlich auf die Bestimmung solcher Größen wie Temperatur, Massedurchsatz, Wärmemenge oder z. B. die Grenzwertkontrolle von Temperaturen.

Bekannt ist, daß bei Wärmeübertragern auf Grund der zu erwartenden Verschmutzungsbedingten Verschlechterung des Wärmedurchgangs Mehrkosten durch Überdimensionierung bzw. Energieverluste durch Minderleistung der Wärmeaustauscher entstehen (H. Schnell, B. Slipcevic: Wärmeaustauscher: Rohrbündel-Wärmeaustauscber expert-Verlag, Ehningen bei Böblingen 1990, S. 54-74).

Nachteilig wirkt sich aus, daß wegen mangelnder Angaben zum Betriebszustand der Wärmeübertrager diese oft mit schlechtem Wärmedurchgangsverhalten arbeiten.

Minderleistungen versucht man z. B. bei Wärmeübertragern Dampf/Wasser im Teillastbereich durch Absenken des Kondensatstandes bzw. Anheben des Dampfdruckes auszugleichen. Die meßtechnische Erfassung des Wärmedurchgangsverhaltens bzw. des Verschmutzungszustandes von Wärmeübertragern ist nicht bekannt.

Genaue Aussagen zum Betriebszustand der Wärmeübertrager ermöglichen es, z. B. durch zyklische Reinigung ständig ein gutes Betriebsverhalten der Wärmeübertrager zu gewährleisten. Der Vorteil ist die wirtschaftliche Prozeßführung.

Das im Patent DD 241 122 A1 angeführte Verfahren zur energetischen Bewertung von Prozessen und Anlagen ist zu allgemein gefaßt und enthält kein spezielles Verfahren zur Diagnose von Wärmeübertragern.

Ziel der Erfindung ist es, die Wärmeübertrager auf Grund guter Wärmeübertragereigenschaften effektiv und wirtschaftlich zu betreiben.

Der Erfindung liegt die technische Aufgabe zugrunde, anhand der Diagnose des Betriebszustandes der Wärmeübertrager Rückschlüsse auf die Verschmutzung zu ziehen und daraus geeignete Maßnahmen für das Betriebsregime abzuleiten.

Erfindungsgemäß wird diese Aufgabe dadurch gelöst, daß mittels Messung der Ein- und Austrittstemperaturen der am Wärmetausch beteiligten Medien sowie des Heizmediendurchsatzes eine energetische Kenngröße Ke(0), die den Wärmedurchgangskoeffizienten k [W/m$^2$K] beinhaltet, zu einem Ausgangszeitpunkt gebildet und zu der zu einem späteren Zeitpunkt durch Messung der Ein- und Austrittstemperaturen der am wärmetausch beteiligten Medien sowie des Heizmediendurchsatzes gebildeten Istgröße der energetischen Kenngröße Ke(t) ins Verhältnis gesetzt wird, wobei dieses Verhältnis im Bereich $0 \leq Ke(t)/Ke(0) \leq 1$ angezeigt wird.

Das so gewonnene Verhältnis wird verwendet zur Klassifizierung des Verschmutzungszustandes.

Das Verfahren zur Diagnose von Wärmeübertragern unterliegt keinen Beschränkungen bezüglich des Temperaturbereiches bzw. der Höhe des Massedurchsatzes des zu untersuchenden Wärmeübertragers.

Bei konstanten Wasserdurchsätzen ist diese Kenngröße im wesentlichen nur von der Größe der Verschmutzung abhängig. Ein differentieller Zuwachs der Verschmutzung bewirkt eine differentielle Verschlechterung des Wärmedurchgangskoeffizienten und beeinflußt direkt das vom Verfahren gebildete Verhältnis. Der Ausgangswert der Kenngröße Ke(0) für einen neuen Wärmeübertrager wird nach Erfassung der Meßgrößen unter den konkreten Betriebsbedingungen bei Einhaltung eines konstanten Massedurchsatzes ermittelt und gespeichert. Das aus Istwert und Ausgangswert gebildete Verhältnis, welches sich im Bereich $0 \leq Ke(t)/ke-(0) \leq 1$ bewegt, informiert über den aktuellen Verschmutzungszustand.

Werte um 0,6 geben eine leichte, um 0,5 eine mittlere und um 0,3 eine starke Verschmutzung an.

Bei sich schon im Betrieb befindlichen Wärmeübertragern gelten modifizierte Werte.

Das Verfahren gestattet z. B. in Verbindung mit einem Drucker die Darstellung der Trendentwicklung. Werden bestimmte Verschmutzungsgrade erreicht, ist eine Reinigung vorzunehmen. Bei Einsatz eines Fettamins auf der Dampfseite eines Kondensators tritt anstelle der Filmkondensation Mischkondensation, gekennzeichnet durch einen hohen Anteil von Tropfenkondensation mit wesentlich vergrößertem Wärmeübergangkoeffizienten, auf. Das Verfahren gestattet eine Beobachtung des verbesserten Wärmedurchgangs. Ist eine mit diesem Fettamin behandelte Heizfläche für den Kondensatorbetrieb im Einsatz, kann durch das Verfahren der Zeitpunkt der Erneuerung dieser Fettaminschicht leicht erkannt werden.

## Ausführungsbeispiel

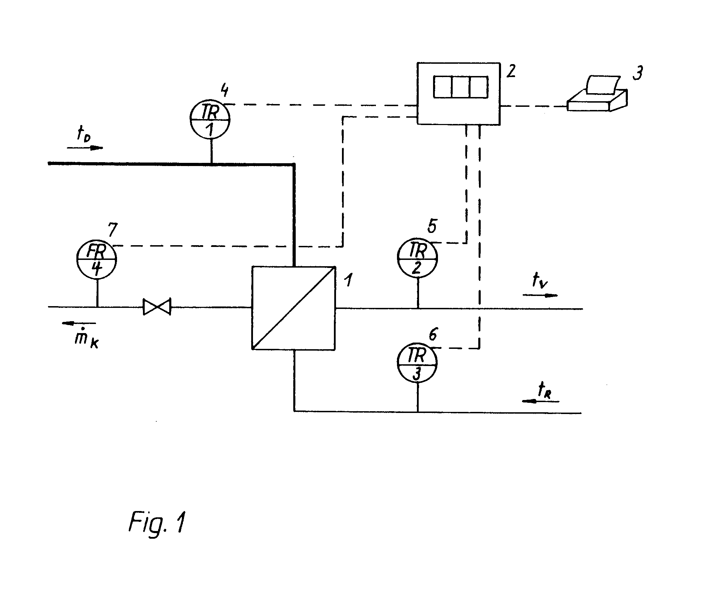

Eine Ausführungsform wird nachstehend anhand der Zeichnung näher erläutert. In der Zeichnung zeigt Fig. 1 die Anwendung des Verfahrens bei einem Wärmeübertrager Dampf/Wasser (1). Die energetische Kenngröße Ke wird aus den gemessenen Werten Kondensatmassestrom ($m_K$), Dampftemperatur ($t_D$) sowie Vor- und Rücklauftemperatur ($t_V$, $t_R$) z. B. mittels Meßgerät (2) wie folgt ermittelt:

$$Ke(0) = \frac{\dot{m}_{Ko} * r}{t_{Vo} - t_{Ro}} * \ln \frac{t_{Do} - t_{Ro}}{t_{Do} - t_{Vo}}$$

Der Index 0 kennzeichnet den Ausgangszustand.

$$Ke(t) = \frac{\dot{m}_K * r}{t_V - t_R} * \ln \frac{t_D - t_R}{t_D - t_V}$$

Der Index t charakterisiert den aktuellen Zustand.

Die Verdampfungswärme (r) geht als konstante Größe ein. Das Verhältnis der energetischen Kenngröße bildet sich aus:

$$0 \leq \frac{Ke(t)}{Ke(0)} \leq 1$$

Der Verhältniswert gibt Auskunft über den Verschmutzungsgrad. Z. R. mittels eines Druckers (3) läßt sich über einen längeren Zeitraum der Verschmutzungstrend verfolgen.

**Patentansprüche**

1. Verfahren zur Diagnose des Verschmutzungszustandes von Wärmeübertragern, **gekennzeichnet dadurch**, daß zu einem Ausgangszeitpunkt die Ein- und Austrittstemperaturen der am Wärmetausch beteiligten Medien sowie der Heizmediendurchsatz gemessen und zu einer energetischen Kenngröße Ke(0), die den Wärmedurchgangskoeffizienten k [W/m$^2$K] beinhaltet, verarbeitet werden und zu einem späteren Zeitpunkt (Istzustand) die Ein- und Austrittstemperaturen der am Wärmetausch beteiligten Medien und der Heizmediendurchsatz erneut gemessen und zu einer energetischen Kenngröße Ke(t), die den Wärmedurchgangskoeffizienten k (W/m$^2$K] beinhaltet, verarbeitet werden und das aus Ist- und Ausgangszustand der energetischen Kenngrößen gebildete Verhältnis im Bereich 0 ≤ Ke(t)/Ke(0) ≤ 1 angezeigt wird und somit ein Maß für die Verschmutzung ist.

Fig. 1